(19) Europäisches Patentamt
European Patent Office
Office européen des brevets

(11) **EP 3 363 297 B1**

(12) **EUROPEAN PATENT SPECIFICATION**

(45) Date of publication and mention
of the grant of the patent:
**25.11.2020 Bulletin 2020/48**

(21) Application number: **16866051.2**

(22) Date of filing: **06.10.2016**

(51) Int Cl.:
**A23K 50/45** *(2016.01)*          **A23K 20/142** *(2016.01)*

(86) International application number:
**PCT/JP2016/079815**

(87) International publication number:
**WO 2017/086049 (26.05.2017 Gazette 2017/21)**

(54) **METHOD FOR MANUFACTURING PET FOOD**

VERFAHREN ZUR HERSTELLUNG VON HAUSTIERFUTTER

PROCÉDÉ POUR LA PRÉPARATION D'UN ALIMENT POUR ANIMAUX DE COMPAGNIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.11.2015 JP 2015227965**

(43) Date of publication of application:
**22.08.2018 Bulletin 2018/34**

(73) Proprietor: **Unicharm Corporation
Ehime 799-0111 (JP)**

(72) Inventors:
• **SAKODA Junya
Itami-shi
Hyogo 664-0831 (JP)**
• **KANEHIRO Youko
Itami-shi
Hyogo 664-0831 (JP)**

(74) Representative: **Dolleymores
9 Rickmansworth Road
Watford, Hertfordshire WD18 0JU (GB)**

(56) References cited:
**WO-A1-2010/037783          WO-A2-2006/074087
CA-A- 1 167 312          JP-A- S6 070 047
JP-A- S6 158 554          JP-A- S6 374 456
JP-A- 2009 159 856          JP-A- 2011 527 195
JP-A- 2012 191 934          JP-A- 2012 504 400
JP-A- 2013 500 010          JP-A- 2014 008 045
US-A1- 2012 237 642**

• **Ann Wortinger: "Types of pet foods" In: "Nutrition
for Veterinary Technicians and Nurses", 22
August 2001 (2001-08-22), Wiley, XP055507459,
ISBN: 978-1-118-68836-6 pages 103-110, * page
107, paragraph 4 - page 108, paragraph 4 ***

**Description**

Technical Field

The present invention relates to a method for manufacturing pet food.

Background Art

Granular pet food is classified into dry type pet food with a low moisture content and semi-moist type pet food with a moisture content larger than that of the dry type pet food.

Typically, the amount of saccharides contained in the semi-moist type pet food is larger than that of the dry type pet food. For example, an example of PTL 1 describes soft dry food obtained by adding 20 parts by mass of water to 100 parts by mass of ingredients into which 10.5 parts by mass of glucose has been blended to obtain an ingredient mixture; kneading the ingredient mixture at 140°C; extracting, forming, and cooling the resultant; and coating the resultant with 4 parts by mass of a coating composition. Here, the soft dry food indicates puffed pet food with a moisture content of 25% to 35% by mass.

In a case where semi-moist pet food contains a large amount of saccharides, palatability is likely to be sufficiently obtained, and the storability is also improved due to a decrease in moisture activity.

One reason why palatability is sufficiently obtained in the case where the semi-moist type pet food contains a large amount of saccharides, is likely to be that a specific flavor component is considered to be generated due to the Maillard reaction occurred between amino acids and saccharides contained in the ingredients when the pet food is heated during the manufacturing process.

Citation List

Patent Literature

[PTL 1] Japanese Unexamined Patent Application, First Publication No. 2012-075414

US 2012/237642 A1 discloses a semi-moist animal food product, produced by extrusion cooking, wherein the extruder is charged at least with the following ingredients: (1a) at least one component of the group dry meat, meat meal, dry fish, fish meal; (1b) meat and/or fish; (1c) optionally water or steam, where not introduced by or in combination with (1a) or (1b).

WO 2010/037783 A1 discloses a process to produce a food or feed flavour.

The process comprises preparing a composition comprising a cystein and/or glutathione, incubating the composition under conditions of temperature and reaction time sufficient for the feed or food flavour to develop, and optionally mixing the food or feed flavour with one or more other ingredients.

Summary of Invention

Technical Problem

In recent years, the desire for healthful pet food has been increasing. Accordingly, pet food with a low content of saccharides has been desired in order to prevent excess intake of sugar.

However, according to the findings of the present inventors, the palatability is significantly decreased when the content of saccharides is reduced. It is assumed that the palatability is decreased because the sweetness of the pet food caused by saccharides themselves is decreased and the Maillard reaction is unlikely to occur.

An object of the present invention is to provide a method for manufacturing semi-moist type pet food having excellent palatability (biting properties) for pets even though the content of saccharides is small.

Solution to Problem

The present invention provides the method for manufacturing pet food of independent claim 1. The dependent claims specify preferred but optional features.

Advantageous Effects of Invention

According to the present invention, it is possible to provide a method for manufacturing semi-moist type pet food having excellent palatability for pets even though the content of saccharides is small.

Description of Embodiments

In the present specification, the term "pets" indicates animals that have been bred by people. In a narrower sense, pets are animals being cared for by their owners. Further, the term "pet food" indicates feed for pets. The pet food can be sold as "animal feed" or "animal food".

<Method for measuring moisture content>

In the present specification, the moisture content is a value acquired by a normal pressure heating and drying method.

Specifically, an object to be measured is pulverized using a pulverizer so as to pass through a sieve having an opening diameter of 1 mm and then used as a sample. The mass (W1 gram) of an aluminum weighing can is measured in advance as a constant weight value. The sample is put into the aluminum weighing can and the mass (W2 gram) is weighed. Next, the sample is dried under conditions of 135°C for 2 hours using a forced circulation type hot air drier. The sample stands and cools in a dry atmosphere (in a silica gel desiccator) and the mass thereof (W3 gram) is weighed. The moisture content is acquired from the obtained respective mass values using the following equation.

$$\text{Moisture content (unit: \% by mass)} = (W2 - W3) \div (W2 - W1) \times 100$$

The moisture content of pet food is set to a value measured immediately after a product manufactured by accommodating pet food in a packaging container and sealing the packaging container is opened within 30 days from the date of manufacture or set to a value measured under conditions similar to the conditions described above.

<Method for measuring content of each component>

In the present specification, the content (unit: % by mass) of each component in the pet food in terms of solid content is a value obtained according to the following measuring method.

[Saccharides]

The content of saccharides is a value obtained by performing measurement according to high performance liquid chromatography described in Feed Analysis Standard Comment (second edition) published by Japan Scientific Feeds Association.

[Free cysteine]

The content of free cysteine is a value obtained by performing measurement according to high performance liquid chromatography described in Feed Analysis Standard Comment (second edition) published by Japan Scientific Feeds Association.

[Hydrolyzed cysteine and hydrolyzed methionine]

The content of hydrolyzed cysteine or hydrolyzed methionine is a value obtained by performing measurement according to an amino acid automatic analysis method described in Feed Analysis Standard Comment (second edition) published by Japan Scientific Feeds Association.

[Crude protein]

The content of crude protein (% by mass) is calculated by multiplying the nitrogen content (% by mass) measured by a Kjeldahl method described in Feed Analysis Standard Comment (second edition) published by Japan Scientific Feeds Association by 6.25 as a protein coefficient.

According to the present method, the total content of amino acids and aminos other than pure protein is measured as the crude protein content.

[Crude fat]

The content of crude fat is a value measured by an acid-decomposed diethyl ether extrusion method described in Feed Analysis Standard Comment (second edition) published by Japan Scientific Feeds Association.

[Calcium, phosphorus, sodium, potassium, and magnesium]

The content of calcium, phosphorus, sodium, potassium, or magnesium is a value measured by ICP emission spectrometry described in Feed Analysis Standard Comment (second edition) published by Japan Scientific Feeds Association.

[Vitamins, thiamine, riboflavin, and pyridoxine]

The content of vitamin A, vitamin D, vitamin E, thiamine, riboflavin, pyridoxine, or vitamin $B_{12}$ is a value obtained by performing measurement according to high performance liquid chromatography described in Feed Analysis Standard Comment (second edition) published by Japan Scientific Feeds Association.

<Pet food>

[Moisture content]

The moisture content of the pet food is in a range of 15% to 30% by mass. Pet food with a moisture content of 15% by mass or greater indicates so-called semi-moist type pet food. From the viewpoint of storability, the moisture content of the pet food is 30% by mass or less.

[Content of saccharides]

The content of saccharides in the pet food is 5% by mass or less. In a case where the content of saccharides is 5% by mass or less, the effect of improving the palatability using the Maillard reaction is likely to be insufficient, and thus the effect obtained by applying the present invention is high. For consumers that desire pet food with a low content of sugar, it is preferable that the content of saccharides in the pet food is small. For example, the content thereof is preferably 4% by mass or less, preferably 3% by mass or less, and still more preferably 2% by mass or less or may be zero.
Three kinds of saccharides, which are glucose, fructose, and sucrose, are added to typical pet food in order to improve the palatability. In the present specification, the total amount of typical saccharides, which are glucose, fructose, and sucrose, obtained by measuring the content (unit: % by mass) thereof in terms of solid content is set as the content of the saccharides in the pet food.

[Cysteine and salt thereof]

Specific examples of the cysteine and the salt thereof used in the present invention include L-cysteine and cysteine hydrochloride. These may be used alone or in combination of two or more kinds thereof. L-cysteine is preferable in a case where a lower content of sodium is preferable, and cysteine hydrochloride is preferable from the viewpoint that the cost is low and the effect of improving the palatability is sufficiently obtained.
The pet food is manufactured by adding the cysteine or the salt thereof to the ingredient mixture and performing a heating step, water and the cysteine or the salt thereof in the ingredient mixture react with each other to generate a flavoring component. It is considered that the flavoring component contributes to improvement of the palatability.
The total amount of the cysteine and the salt thereof to be added is 0.01% by mass or greater, preferably 0.05% by mass or greater, and more preferably 0.1% by mass or greater in terms of solid content with respect to the amount of the ingredient mixture in the pet food. Since the amount of the cysteine to be added is 0.01% by mass or greater, the effect of improving the palatability is sufficiently obtained.
In a case where the amount of cysteine to be added is large, an undesirable odor is likely to be smelled by people. Therefore, the amount of cysteine to be added is 0.5% by mass or less, more preferably 0.4% by mass or less, and still more preferably 0.3% by mass or less.
In a case where the ingredient mixture contains the cysteine or the salt thereof before being heated, free cysteine is detected from the heated pet food as a trace of the cysteine or the salt thereof. Specifically, at least 0.001% by mass of free cysteine, which is the detection limit value, is detected from the pet food when the content of the free cysteine is measured according to the above-described measuring method.
Meanwhile, it is known that cysteine is easily oxidized and becomes cystine, and cysteine is contained in ingredients derived from meat in the form of cystine. In a case where the ingredient mixture contains cystine and the cysteine or the salt thereof is not added to the ingredient mixture, hydrolyzed cysteine is detected from the pet food obtained by heating the ingredient mixture, but free cysteine is not detected therefrom.

<Ingredients>

Ingredients other than the cysteine or the salt thereof are set out in the present claims. In manufacture of the pet food, known ingredients can be used as appropriate. In this case, ingredients are used such that the content of saccharides in the pet food is set to 5% by mass or less.

For example, it is preferable that ingredients selected from raw meat (such as chicken meat, beef, pork, venison, and fish), the following powder ingredients, and the following liquid ingredients are combined to constitute the ingredient mixture and then external additives are used. The external additives indicate components to be added (externally added) after the ingredient mixture is formed.

[Powder ingredients]

Examples of the powder ingredients include cereals (such as corn, wheat, rice, barley, oat, and rye), beans (such as whole soybeans), starch (wheat starch, corn starch, rice starch, potato starch, tapioca starch, and sweet potato starch), vegetable protein sources (such as corn gluten meals and processed soybean products (such as defatted soybeans and protein other than soybeans), animal protein sources (such as meals and eggs (egg powder)), vegetables, saccharides (such as fructose, glucose, and sucrose), and powder additives (such as vitamins, minerals, amino acids other than cysteine or a salt thereof, flavoring ingredients, fibers, colorants, and palatability improvers).

The meals as the animal protein sources indicate powder obtained by compressing meat or seafood and finely grinding the compressed meat or seafood. Examples of the meals include chicken meal, pork meal, beef meal, fish mill, and mixed mill of these.

Examples of the palatability improvers include extract powder of animal ingredients such as livestock meat and seafood; and extract powder of vegetable ingredients.

[Liquid ingredients]

Examples of the liquid ingredients include humectants (alternatively an aqueous solution), fats and oils, liquid palatability improvers, and added water. The added water indicates water to be added in a state of water other than solvents in liquid ingredients.

The fats and oils may be vegetable fats and oils (such as corn oil, palm oil, soybean oil, and rapeseed oil) or animal fats and oils (such as chicken oil, lard, beef tallow (fat), and milk fats and oils). Fats and oils in a solid state at room temperature are used by being heated such that the fats and oils enter a liquid state. In a case of using fats and oils, it is preferable that fats and oils are mixed into the liquid ingredients together with an emulsifier in advance to prepare a liquid ingredient composition which is an emulsion, and the liquid ingredient composition is added to the powder ingredients.

Examples of the liquid palatability improvers to be contained in the ingredient mixture include extracts from animal ingredients such as livestock meat and seafood; and extracts from vegetable ingredients.

(Water)

The ingredient mixture contains water in addition to the moisture in the solid ingredients. The water in the ingredient mixture contributes to improvement of the palatability by reacting with the cysteine or the salt thereof during the heating step and generating a flavoring component.

Further, the moisture content of pet food to be finally obtained can be adjusted by the moisture content in the solid ingredients and the total amount of added water and solvents in ingredients to be added in a state of an aqueous solution.

From the viewpoints of excellent formability and easily obtaining the effect of improving the palatability sufficiently, the total amount of water in the ingredient mixture, that is, the total amount of added water and solvents in the ingredients to be added in a state of an aqueous solution is preferably 5% by mass or greater, more preferably 8% by mass or greater, and still more preferably 10% by mass or greater. The upper limit thereof is not particularly limited as long as the moisture content of the pet food is in a range of 15% to 30% by mass. For example, the upper limit thereof is preferably 25% by mass or less, more preferably 22% by mass or less, and still more preferably 20% by mass or less.

(Humectant)

A humectant is a component to be added in order to hold the moisture in pet food and decrease the moisture activity.

As the humectant, one or more selected from the group consisting of propylene glycol, glycerin, sodium lactate, and sugar alcohol are preferably used. Sorbitol or reduced sugar syrup is preferable as the sugar alcohol. Further, a combination of two or more kinds thereof may be used. These humectants may be used in the state of an aqueous solution.

The total amount of the humectants (not including solvents) in the pet food is preferably in a range of 4% to 14% by mass, more preferably in a range of 5% to 10% by mass, and still more preferably in a range of 6% to 8% by mass in terms of solid content. In a case where the amount of humectants to be added is in the above-described range, the moisture activity of semi-moist type pet food is likely to be excellent.

[External additive]

As the external additives, liquid external additives and/or powder external additives (for example, fats and oils) can be used.

Examples of the liquid external additives include fats and oils (animal fats and oils and vegetable fats and oils) and liquid palatability improvers (animal ingredient extracts and vegetable ingredient extracts).

Examples of the powder external additives include powder palatability improvers such as extract powder of animal ingredients such as livestock meat and seafood; and extract powder of vegetable ingredients.

In a case of using two or more external additives, the external additives may be mixed in advance and then used. For example, the ingredient mixture may be coated with fats and oils and then coated with a powder or liquid external additive.

<Composition of ingredients>

It is preferable that the composition of ingredients is designed according to the nutrient composition of pet food expected to be obtained. Specifically, it is preferable that the main nutrient components satisfy the following composition in terms of solid content.

The content of crude protein is preferably in a range of 18% to 34% by mass.

The content of crude fat is preferably in a range of 5% to 22% by mass and more preferably in a range of 7% to 15% by mass.

Further, it is preferable that the pet food contains 0.6% to 2.5% by mass of calcium, 0.5% to 1.6% by mass of phosphorus, 0.06% to 1.0% by mass of sodium, 0.2% to 1.5% by mass of potassium, and 0.04% to 0.3% by mass of magnesium.

Further, it is preferable that the pet food contains 5000 to 750000 IU/kg of vitamin A; 500 to 10000 IU/kg of vitamin D; 30 to 1500 IU/kg of vitamin E; 1.0 to 250 mg/kg of thiamine; 2.2 to 250 mg/kg of riboflavin; 1.0 to 250 mg/kg of pyridoxine; and 0.02 to 250 mg/kg of vitamin $B_{12}$.

It is preferable that the above-described composition is satisfied from the viewpoint that the pet food with the composition is nutritionally well-balanced and can be fed as daily food. Therefore, it is possible to provide which has a low content of saccharides, has excellent palatability, and can be fed daily, and this pet food is suitable as pet food with low sugar used for the purpose of suppressing sugar intake of pets.

Particularly, in a case where the pet food to be fed as daily food has a reduced amount of sugar and excellent palatability, the effect of preventing excess sugar intake of pets is high.

<Blending of ingredients>

The blending of ingredients is not particularly limited. It is preferable to design ingredients to be blended such that the above-described composition is satisfied and excellent formability is obtained. A blending of ingredients (including external additives, the total amount of ingredients is 100% by mass) is shown below.

The total amount of cereals, beans, and starch is in a range of 20% to 70% by mass; the total amount of vegetable protein sources is in a range of 5% to 20% by mass; the total amount of animal protein sources is in a range of 5% to 40% by mass; the amount of moisture (the total amount of added water and moisture in the ingredients) is in a range of 15% to 30% by mass; the amount of external additives is in a range of 0.5% to 6.0% by mass; and the rest are other components. The total amount of other components is 1% by mass or greater and preferably 5% by mass or greater.

<Method for manufacturing pet food>

A method for manufacturing pet food of the present invention is not particularly limited as long as the method includes a heating step of heating the ingredient mixture that contains cysteine or a salt thereof and water.

The heating temperature in the heating step is in a range of 70°C to 160°C, preferably in a range of 80°C to 140°C, and more preferably in a range of 100°C to 120°C. In a case where the heating temperature is in the above-described range, a flavoring component is sufficiently generated due to a reaction between water and the cysteine or the salt thereof, and the effect of improving the palatability is sufficiently obtained. In a case where the heating temperature is higher than 160°C, the ingredients is likely to be burned.

In a case where the ingredient mixture is heated two or more times until pet food as a final product is obtained, it is preferable that the heating temperature for each time is 160°C or lower and the heating temperature for at least once is in a range of 70°C to 160°C.

The time for heating the ingredient mixture at a temperature of 70°C to 160°C is preferably in a range of 5 to 180 seconds and more preferably in a range of 30 to 60 seconds in total. In a case where the heating time is in the above-described range, the starch in the ingredient mixture is pregelatinized, and a flavoring component is sufficiently generated due to a reaction between water and the cysteine or the salt thereof.

It is preferable that granular pet food is manufactured by heating and granulating the ingredient mixture. It is preferable that the ingredient mixture is coated with external additives after granulation. The granular pet food may be non-puffed granules or puffed granules. Puffed granules tend to be softer.

Puffed granules can be manufactured by providing a puffing step of heating the ingredient mixture and generating gas therein so that the ingredient mixture is puffed by forming the ingredient mixture in a granular shape before, after, or simultaneously with the puffing step. During the puffing step, the volume of the ingredient mixture is increased due to the generation of gas to have a porous property. In addition, the bulk density is decreased due to an increase in volume.

For example, a method for extruding and granulating puffed granules using an extrusion granulator provided with a preconditioner and an extruder can be used.

As a method for manufacturing puffed granules using an extrusion granulator, for example, a method described in "Small Animal Clinical Nutrition 4th Edition" (edited by Michael S. Hand, Craig D. Thatcher, Rebecca L. Remillard, and Philip Roudebusg, published by Mark Morris Associates; 2000; p. 157 to p. 190) or the like can be used.

For example, mixed powder is prepared by mixing powder ingredients in advance. Further, a liquid ingredient composition is prepared by mixing liquid ingredients in advance. The mixed powder and the liquid ingredient composition are heated while being mixed using a preconditioner, and the mixture (ingredient mixture) of these is supplied to an extruder. The ingredient mixture is heated while being kneaded in the extruder, and the ingredient mixture is extruded and granulated in a granular shape at an outlet of the extruder. The obtained granules are cooled, thereby obtaining granular semi-moist type pet food.

In the granular pet food, the shape and the size of granules are not particularly limited as long as the shape and the size thereof are suitable for a pet to eat.

Examples

Hereinafter, the present invention will be described in more detail with reference to examples, but the present invention is not limited to these examples.

[Examples 1 to 4]

Granular semi-moist type pet food (comprehensive nutritional diet) was manufactured using the blending listed in Table 1.

Example 1 is a comparative example in which powder saccharides and liquid sugar were added to the ingredient mixture, at least 5% by mass of saccharides were contained, and cysteine or a salt thereof was not contained therein.

Examples 2 and 3 are examples, each of which saccharides were not added to the ingredient mixture, the content of saccharides was set to 5% by mass or less, and cysteine or a salt thereof was blended.

Example 4 is a comparative example in which saccharides were not added to the ingredient mixture, the content of saccharides was set to 5% by mass or less, and methionine which is the same sulfur-containing amino acid as cysteine was blended in place of the cysteine or the salt thereof.

An aqueous solution was used for both of liquid sugar and a humectant. In the table, the amount of water to be blended indicates the total amount of added water and water as solvents of these. The amounts of beef tallow and the emulsifier to be blended were common in each example, and the amount of water was adjusted such that the total amount was set to 100% by mass.

Powder ingredients (cereals, vegetable protein sources, animal protein sources, powder saccharides, additives, L-cysteine, cysteine hydrochloride, and methionine) from among the ingredients of the ingredient mixture listed in Table 1 were mixed while being pulverized using a grinder to obtain mixed powder. The remaining ingredients (liquid sugar, a humectant, beef tallow, an emulsifier, and water) were separately mixed to prepare a liquid ingredient composition (emulsion).

The mixed powder and the liquid ingredient composition were quantitatively supplied to a preconditioner of an extrusion granulator, mixed, heated at 100°C for 120 seconds, and supplied to an extruder.

In the extruder, the mixture (ingredient mixture) obtained by mixing the ingredients in the preconditioner was heated at 110°C for 30 seconds while being kneaded and was puffed simultaneously with extrusion and granulation of the mixture in a granular shape at the outlet of the extruder. The obtained puffed granules were coated with external additives and cooled at room temperature (25°C), thereby obtaining granular pet food.

In the pet food which was cooled at room temperature for 12 hours after the coating of the puffed granules was completed, the moisture content and the content of each component listed in Table 1 were measured according to the above-described method. The results are listed in Table 1.

The content (in terms of solid content) of hydrolyzed methionine in Example 4 is an estimated value. Since 0.3% of methionine was blended in addition to methionine derived from ingredients, the content is estimated to be in a range of 0.5% to 0.8% by mass.

Further, it was confirmed that each of Examples 1 to 4 satisfies the nutritional standard of 7% to 15% by mass of crude fat; 0.6% to 2.5% by mass of calcium; 0.5% to 1.6% by mass of phosphorus; 0.06% to 1.0% by mass of sodium; 0.2% to 1.5% by mass of potassium; 0.04% to 0.3% by mass of magnesium; 5000 to 250000 IU/kg of vitamin A; 500 to 5000 IU/kg of vitamin D; 50 to 1000 IU/kg of vitamin E; 1.0 to 250 mg/kg of thiamine; 2.2 to 250 mg/kg of riboflavin; 1.0 to 250 mg/kg of pyridoxine; and 0.022 to 250 mg/kg of vitamin $B_{12}$.

In addition, since the pet food obtained in the present example was obtained by granulating the ingredient mixture and then coating the granulated ingredient mixture with the external additives (not including moisture) without heating and drying the resultant, the content (in terms of solid content) of the humectant in the pet food was calculated by assuming that the moisture content contained in the ingredient mixture was the same as the moisture content contained in the pet food.

<Method for evaluating palatability>

The palatability was evaluated according to a method for comparing the ingested amounts using a combination of pet food P of Example 1 and each pet food Q of Examples 2 to 4. The test was performed for 2 days by monitoring 20 dogs.

On the first day, a predetermined amount of pet food P and pet food Q was were fed to each dog at the same time, one from the left side and the other from the right side, and then each amount of pet food eaten by a dog was measured either after the dog has eaten all of the pet food or after 1 hour.

The ratio between the ingested amount of pet food P and the ingested amount of pet food Q (P:Q, P + Q = 100%) was acquired in percentages based on the total mass of the pet food eaten by one dog during the first day. The percentages obtained from the number of dogs that had been monitored were averaged and set as the result for the first day.

On the second day, contrary to the first day, the same amount of pet food P and pet food Q as in the first day was fed to each dog at the same time, one from the left side and the other from the right side. The rest of the procedures were the same as those of the first day and the result of the second day was obtained.

The results of the first and second days were averaged, and the ratio "P:Q" between the ingested amount of pet food P and the ingested amount of pet food Q was acquired. As the numerical value of P or Q is high, this indicates that the dog that was monitored pleasantly ate the pet food. The results are listed in Table 1.

[Table 1]

| | | | Example1 | Example 2 | Example 3 | Example 4 |
|---|---|---|---|---|---|---|
| Blending of ingredients | Ingredient mixture [% by mass] | Cereals | 31.00 | 38.50 | 38.50 | 38.50 |
| | | Vegetable protein sources | 12.00 | 12.00 | 12.00 | 12.00 |
| | | Animal protein sources | 20.00 | 20.00 | 20.00 | 20.00 |
| | | Additives (other than amino acids) | 1.77 | 1.77 | 1.77 | 1.77 |
| | | L-cysteine | 0 | 0.10 | 0 | 0 |
| | | Cysteine hydrochloride | 0 | 0 | 0.10 | 0 |
| | | Methionine | 0 | 0 | 0 | 0.30 |
| | | Humectant | 6.50 | 6.50 | 6.50 | 6.50 |
| | | Saccharides (total amount of powder saccharides and liquid sugar) | 8.75 | 0 | 0 | 0 |
| | | Other liquid ingredients (total amount of beef tallow, emulsifier, and water) | Remainder | Remainder | Remainder | Remainder |
| | External additives [% by mass] | | 5.50 | 5.50 | 5.50 | 5.50 |
| | Total amount [% by mass] | | 100.00 | 100.00 | 100.00 | 100.00 |
| | Content of cysteine or salt thereof in ingredient mixture (in terms of solid content) [% by mass] | | 0 | 0.14 | 0.14 | 0 |
| Pet food | Moisture content [% by mass] | | 25.70 | 24.30 | 24.30 | 24.30 |
| | Content of humectant (in terms of solid content) [% by mass] | | 8.75 | 8.59 | 8.59 | 8.59 |
| | Content of each component (in terms of solid content) [% by mass] | Crude protein | 28.13 | 30.25 | 30.25 | 30.25 |
| | | Saccharides (total amount of fructose, glucose, and sucrose) | 11.14 | 1.94 | 1.94 | 1.94 |
| | | Hydrolyzed methionine | 0.46 | 0.50 | 0.50 | 0.5-0.8 |
| | | Hydrolyzed cysteine | 0.39 | 0.47 | 0.47 | 0.39 |
| | | Free cysteine | Not detected | 0.005 | 0.005 | Not detected |
| Evaluation of palatability (P:Q) | | | P (reference) | 53:47 | 48:52 | 57:43 |

As shown in the results of Table 1, it was confirmed that the obtained pet food contained free cysteine based on Example 2 in which L-cysteine was blended into the ingredient mixture or Example 3 in which cysteine hydrochloride was blended into the ingredient mixture.

On the contrary, the obtained pet food of Examples 1 and 4, in which either of L-cysteine or cysteine hydrochloride was not blended into the ingredient mixture, contained hydrolyzed cysteine, but free cysteine was not detected from the pet food.

As shown in the results of evaluating the palatability listed in Table 1, in the semi-moist type pet food obtained in Examples 2 and 3, the numerical value of P or Q in the ratio "P:Q" between the ingested amounts was in a range of 50 ± 3% and the palatability was substantially the same as that of Example 1. In other words, even though the pet food of Examples 2 and 3 had a significantly lower content of saccharides compared to the pet food of Example 1, the same degree of palatability as that of Example 1 was obtained.

On the contrary, the pet food of Example 4 had inferior palatability to that of Example 1 since the content of saccharides was significantly low, and the effect of improving the palatability was not exerted even though methionine was blended into the ingredient mixture.

Further, the pet food of Examples 2 and 3 had a specific flavor similar to so-called rotten-egg smell (hydrogen sulfide smell), but the pet food of Examples 1 and 4 did not have such a flavor.

[Test Example 1]

In the present example, the relationship between the temperature and generation of flavor when a cysteine aqueous solution was heated was examined.

An L-cysteine aqueous solution at a concentration of 0.1% by mass was heated at a liquid temperature of 60°C, 80°C, or 100°C, and the intensity of the flavor was sensory-evaluated.

As the result, the flavor was not smelled at 60°C, the flavor was smelled at 80°C, and the flavor was strengthened at 100°C. The flavor here was the same flavor as the rotten-egg smell of the pet food of Examples 2 and 3.

Based on the results, it was understood that the specific flavor of the pet food of Examples 2 and 3 was generated due to the reaction between cysteine and water in the heating step. Further, based on the results listed in Table 1, it was assumed that this flavor contributes to improvement of the palatability.

**Claims**

1. A method for manufacturing pet food which has a moisture content of 15% to 30% by mass and a saccharide content of 5% by mass or less in terms of solid content and contains 0.001% by mass or greater of free cysteine, the method comprising blending a total amount of cereals, beans, and starch in a range of 20% to 70% by mass; a total amount of vegetable protein sources in a range of 5% to 20% by mass, a total amount of animal protein sources in a range of 5% to 40% by mass, a total amount of added water and moisture in the ingredients in a range of 15% to 30% by mass, an amount of external additives in a range of 0.5% to 6.0% by mass, and a total amount of other components of 1% by mass or greater, wherein the total amount of blended ingredients is 100% by mass; the method comprising the steps of:

   a heating step of heating and granulating an ingredient mixture containing the cereals, beans, and starch, the vegetable protein sources, the animal protein sources and cysteine or a salt thereof and water, and
   a coating step of coating the ingredient mixture with the external additives after the granulating step, wherein the total content of the cysteine or the salt thereof is 0.01% by mass or greater and 0.5% by mass or less in terms of solid content with respect to the content of the ingredient mixture, and
   wherein the heating temperature in the heating step is in a range of 70°C to 160°C.

2. The method for manufacturing pet food according to claim 1 wherein the ingredient mixture contains cysteine hydrochloride.

3. The method for manufacturing pet food according to claim 1 or claim 2, wherein the pet food has the following composition:

   in terms of solid content,
   18% to 34% by mass of crude protein;
   5% to 22% by mass of crude fat;
   0.6% to 2.5% by mass of calcium;
   0.5% to 1.6% by mass of phosphorus;
   0.06% to 1.0% by mass of sodium;

0.2% to 1.5% by mass of potassium;
0.04% to 0.3% by mass of magnesium;
5000 to 750000 IU/kg of vitamin A;
500 to 10000 IU/kg of vitamin D;
30 to 1500 IU/kg of vitamin E;
1.0 to 250 mg/kg of thiamine;
2.2 to 250 mg/kg of riboflavin;
1.0 to 250 mg/kg of pyridoxine; and
0.02 to 250 mg/kg of vitamin $B_{12}$.

4. The method for manufacturing pet food according to any preceding claim, wherein the pet food further contains: 7% to 14% by mass of a humectant in terms of solid content.

**Patentansprüche**

1. Verfahren zur Herstellung von Haustierfutter, das einen Feuchtigkeitsgehalt von 15 Massen-% bis 30 Massen-% und einen Saccharidgehalt von 5 Massen-% oder weniger bezogen auf den Feststoffgehalt aufweist und 0,001 Massen-% oder mehr freies Cystein enthält,

wobei das Verfahren das Mischen einer Gesamtmenge von Getreide, Bohnen und Stärke in einem Bereich von 20 Massen-% bis 70 Massen-%; einer Gesamtmenge von pflanzlichen Proteinquellen in einem Bereich von 5 Massen-% bis 20 Massen-%, einer Gesamtmenge von tierischen Proteinquellen in einem Bereich von 5 Massen-% bis 40 Massen-%, einer Gesamtmenge von zugefügtem Wasser und zugefügter Feuchtigkeit in den Bestandteilen in einem Bereich von 15 Massen-% bis 30 Massen-%, einer Menge von externen Zusatzstoffen in einem Bereich von 0,5 Massen-% bis 6 Massen-% und einer Gesamtmenge von anderen Komponenten von 1 Massen-% oder mehr umfasst, wobei die Gesamtmenge der gemischten Bestandteile 100 Massen-% beträgt;
wobei das Verfahren die folgenden Schritte umfasst:

einen Erhitzungsschritt zum Erhitzen und Granulieren eines Bestandteilgemischs, enthaltend das Getreide, die Bohnen und Stärke, die pflanzlichen Proteinquellen, die tierischen Proteinquellen und das Cystein oder ein Salz davon und Wasser, und
einen Beschichtungsschritt zum Beschichten des Bestandteilgemischs mit den externen Zusatzstoffen nach dem Granulierungsschritt,
wobei der Gesamtgehalt des Cysteins oder des Salzes davon 0,01 Massen-% oder mehr und 0,5 Massen-% oder weniger bezogen auf den Feststoffgehalt in Bezug auf den Gehalt des Bestandteilgemischs beträgt, und
wobei die Erhitzungstemperatur in dem Erhitzungsschritt in einem Bereich von 70 °C bis 160 °C liegt.

2. Verfahren zum Herstellen von Haustierfutter nach Anspruch 1, wobei das Bestandteilgemisch Cysteinhydrochlorid enthält.

3. Verfahren zur Herstellung von Haustierfutter nach Anspruch 1 oder 2, wobei das Haustierfutter die folgende Zusammensetzung aufweist:

bezogen auf den Feststoffgehalt,
18 Massen-% bis 34 Massen-% Rohprotein;
5 Massen-% bis 22 Massen-% Rohfett;
0,6 Massen-% bis 2,5 Massen-% Calcium;
0,5 Massen-% bis 1,6 Massen-% Phosphor;
0,06 Massen-% bis 1,0 Massen-% Natrium;
0,2 Massen-% bis 1,5 Massen-% Kalium;
0,04 Massen-% bis 0,3 Massen-% Magnesium;
5000 bis 750000 IE/kg Vitamin A;
500 bis 10000 IE/kg Vitamin D;
30 bis 1500 IE/kg Vitamin E;
1,0 bis 250 mg/kg Thiamin;
2,2 bis 250 mg/kg Riboflavin;
1,0 bis 250 mg/kg Pyridoxin; und
0,02 bis 250 mg/kg Vitamin $B_{12}$.

4.  Verfahren zur Herstellung von Haustierfutter nach einem der vorangehenden Ansprüche, wobei das Haustierfutter weiter Folgendes enthält:

7 Massen-% bis 14 Massen-% eines Feuchthaltemittels bezogen auf den Feststoffgehalt.

**Revendications**

1.  Procédé de fabrication d'un aliment pour animaux de compagnie ayant un taux d'humidité de 15 % à 30 % en masse et un taux de saccharides de 5 % en masse ou moins en termes de taux de solides et qui contient 0,001 % en masse ou plus de cystéine libre,

    le procédé comprenant le mélange d'une quantité totale de céréales, de haricots et d'amidon dans une plage de 20 % à 70 % en masse ; d'une quantité totale de sources de protéines végétales dans une plage de 5 % à 20 % en masse, d'une quantité totale de sources de protéines animales dans une plage de 5 % à 40 % en masse, d'une quantité totale d'eau ajoutée et d'humidité dans les ingrédients dans une plage de 15 % à 30 % en masse, d'une quantité d'additifs externes dans une plage de 0,5 % à 6,0 % en masse et d'une quantité totale d'autres composants de 1 % en masse ou plus, où la quantité totale d'ingrédients mélangés est de 100 % en masse ;

    le procédé comprenant les étapes suivantes :

    une étape de chauffage et de granulation d'un mélange d'ingrédients contenant les céréales, les haricots et l'amidon, les sources de protéines végétales, les sources de protéines animales et la cystéine ou un sel de celle-ci et de l'eau et

    une étape d'enrobage du mélange d'ingrédients avec les additifs externes après l'étape de granulation,

    où le taux total de cystéine ou du sel de celle-ci est de 0,01 % en masse ou plus et de 0,5 % en masse ou moins en termes de taux de solides rapporté au contenu du mélange d'ingrédients et

    où la température de chauffage à l'étape de chauffage est dans une plage de 70 °C à 160 °C.

2.  Procédé de fabrication d'un aliment pour animaux de compagnie selon la revendication 1 où le mélange d'ingrédients contient du chlorhydrate de cystéine.

3.  Procédé de fabrication d'un aliment pour animaux de compagnie selon la revendication 1 ou la revendication 2, où l'aliment pour animaux de compagnie a la composition suivante :

    en termes de taux de solides,

    de 18 % à 34 % en masse de protéines brutes ;

    de 5 % à 22 % en masse de matières grasses brutes ;

    de 0,6 % à 2,5 % en masse de calcium ;

    de 0,5 % à 1,6 % en masse de phosphore ;

    de 0,06 % à 1,0 % en masse de sodium ;

    de 0,2 % à 1,5 % en masse de potassium ;

    de 0,04 % à 0,3 % en masse de magnésium ;

    de 5 000 à 750 000 UI/kg de vitamine A ;

    de 500 à 10 000 UI/kg de vitamine D ;

    de 30 à 1 500 UI/kg de vitamine E ;

    de 1,0 à 250 mg/kg de thiamine ;

    de 2,2 à 250 mg/kg de riboflavine ;

    de 1,0 à 250 mg/kg de pyridoxine ; et

    de 0,02 à 250 mg/kg de vitamine $B_{12}$.

4.  Procédé de fabrication d'un aliment pour animaux de compagnie selon l'une quelconque des revendications précédentes, où l'aliment pour animaux de compagnie contient en outre :

    de 7 % à 14 % en masse d'un humectant en termes de taux de solides.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012075414 A
- US 2012237642 A1
- WO 2010037783 A1

**Non-patent literature cited in the description**

- Feed Analysis Standard Comment. Japan Scientific Feeds Association
- Small Animal Clinical Nutrition. Mark Morris Associates, 2000, 157-190